# EUROPEAN PATENT SPECIFICATION

(11) **EP 3 472 925 B1**
(45) Date of publication and mention of the grant of the patent: **16.02.2022**
(21) Application number: 16730397.3
(22) Date of filing: 20.06.2016
(51) Int. Cl.: F16F 15/18, H02P 9/10, H02K 7/20, H02P 9/00

(54) **ELECTRICAL ACTUATOR DEVICES FOR REDUCTION OF TORSIONAL OSCILLATIONS IN TURBOMACHINERY SYSTEMS**
ELEKTRISCHE AKTUATOREN ZUR REDUZIERUNG VON TORSIONSSCHWINGUNGEN IN TURBOMASCHINEN-SYSTEMEN
ACTUATEURS ÉLECTRIQUES POUR REDUCTION DE VIBRATIONS DE TORSION DANS DES SYSTÈMES TURBOMACHINES

(43) Date of publication of application: 24.04.2019
(73) Proprietor: Nuovo Pignone Tecnologie SrL, 50127 Florence (IT)
(72) Inventor: TENCA, Pierluigi, 85748 Munchen (DE); ROESNER, Robert, 85748 Munchen (DE); SIHLER, Christof Martin, 12277 Berlin (BE); ROTONDO, Paola, 50127 Florence (IT); SGRO', Daniele, 50127 Florence (IT); MEUCCI, Francesco, 50127 Florence (IT)
(74) Representative: Novagraaf Group
(86) International application number: PCT/EP2016/064210
(87) International publication number: WO 2017/220120

(56) References cited:
- EP-A2- 1 643 122
- WO-A1-2004/112234
- DE-A1- 19 614 470

## Description

### BACKGROUND

The field of the disclosure relates generally to turbomachinery systems, and, more specifically, to electrical actuator devices for reduction of torsional oscillations in turbomachinery systems.

WO 2004/112234 A1 discloses a damping device for damping a torsional oscillation in a rotating drive train.

In known turbomachinery systems employing electrical machines which either drive turbomachines, e.g., electrical motors in pumping operations and compression plants, or are driven by turbomachines, e.g., electrical power generators, complex interactions of electrical networks with torsional dynamics of shafts in rotating equipment trains cause sub-synchronous torsional interactions (SSTIs). In such known turbomachinery systems, e.g., liquefied natural gas compression plants, SSTIs cause torsional oscillations resulting in increased maintenance costs, reduced operational efficiency, and equipment service life reduction.

In at least some known turbomachinery systems employing electrical machines, SSTIs experienced by shafts and rotating machinery coupled thereto are caused by torque imbalances arising in electrical machines including motors and generators. Such electrical machines, shafts, and associated rotating machinery often form long trains of equipment in which SSTIs arising in one portion of the train generate undesirable effects not only at that location, but at various other locations distant from the initial point of origin. Also, in such known turbomachinery systems, mitigation of SSTIs and resulting aberrant torques is expensive, requires substantial modification of existing systems and plant equipment, and is subject to design constraints from existing electrical and mechanical loads. Further, in such known turbomachinery systems, known SSTI and torque mitigation devices and systems are complex, require elaborate control systems, are cumbersome to integrate into existing plant operations, and require complete plant shutdown for their installation and maintenance.

### BRIEF DESCRIPTION

The present invention is defined in the accompanying independent claims 1 and 14, further embodiments are defined in the dependent claims 2-13.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic diagram of an exemplary turbomachinery system;
FIG. 2 is a schematic diagram of an alternative turbomachinery system;
FIG. 3 is a cross-sectional view of an exemplary actuator that may be used in the turbomachinery systems shown in FIGs. 1 and 2;
FIG. 4 is a perspective view of an exemplary axial flux machine actuator that may be used in the turbomachinery systems shown in FIGs. 1 and 2;
FIG. 5 is a cross-sectional view of an alternative actuator that may be used in the turbomachinery systems shown in FIGs. 1 and 2;
FIG. 6 is a perspective view of an exemplary radial flux machine actuator that may be used in the turbomachinery systems shown in FIGs. 1 and 2;
FIG. 7 is a cross-sectional view of an alternative actuator that may be used in the turbomachinery systems shown in FIGs. 1 and 2;
FIG. 8 is a perspective view of an alternative radial flux machine actuator that may be used in the turbomachinery systems shown in FIGs. 1 and 2;
FIG. 9 is a cross-sectional view of an alternative actuator that may be used in the turbomachinery systems shown in FIGs. 1 and 2;
FIG. 10 is a perspective view of an alternative radial flux machine actuator that may be used in the turbomachinery systems shown in FIGs. 1 and 2; and
FIG. 11 is a flowchart diagram of an exemplary method of damping torsional oscillations of a shaft in a turbomachinery system that may be used with the turbomachinery systems shown in FIGs. 1 and 2.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, and such ranges are identified and include all the sub-ranges contained therein unless context or language indicates otherwise.

As used herein, the terms "processor" and "computer" and related terms, e.g., "processing device", "computing device", and "controller" are not limited to just those integrated circuits referred to in the art as a computer, but broadly refers to a microcontroller, a microcomputer, a programmable logic controller (PLC), an application specific integrated circuit (AISC), and other programmable circuits, and these terms are used interchangeably herein. In the embodiments described herein, memory may include, but is not limited to, a computer-readable medium, such as a random access memory (RAM), and a computer-readable non-volatile medium, such as flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may be, but are not limited to, computer peripherals associated with an operator interface such as a mouse and a keyboard. Alternatively, other computer peripherals may also be used that may include, for example, but not be limited to, a scanner. Furthermore, in the exemplary embodiment, additional output channels may include, but not be limited to, an operator interface monitor.

Furthermore, as used herein, the term "real-time" refers to at least one of the time of occurrence of the associated events, the time of measurement and collection of predetermined data, the time to process the data, and the time of a system response to the events and the environment. In the embodiments described herein, these activities and events occur substantially instantaneously.

The electrical actuator devices for reduction of torsional oscillations in turbomachinery systems and associated control systems and methods described herein reduce sub-synchronous torsional interactions (SSTIs) of shafts and rotating machinery including electrical machines in rotating equipment trains. The embodiments described herein also mitigate undesirable effects of SSTIs and aberrant torques arising therefrom in turbomachinery systems. The embodiments described herein further reduce torque imbalances in electrical machines employed in turbomachinery systems. The electrical actuator devices for reduction of torsional oscillations in turbomachinery systems and associated control systems and methods described herein also reduce operating and maintenance costs and increase operational efficiency of turbomachinery systems. The embodiments described herein further provide less complex and less expensive SSTI mitigation devices, systems, and methods that are easier to operate and integrate into existing plant designs. The embodiments described herein also enable installation and maintenance of SSTI mitigation devices and systems without shutting down turbomachinery system operations.

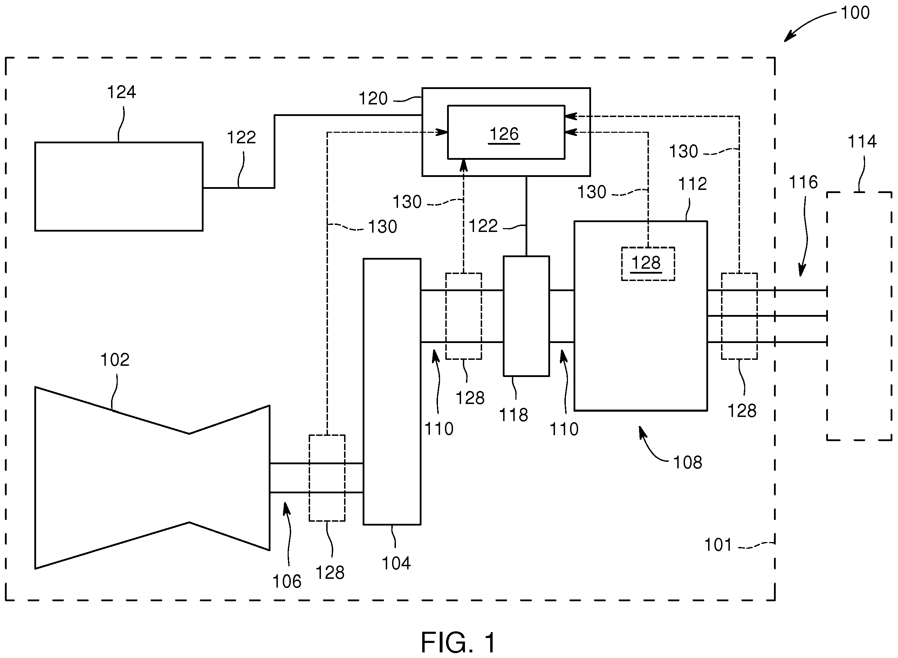

FIG. 1 is a schematic diagram of an exemplary turbomachinery system 100. In the exemplary embodiment, turbomachinery system 100 is situated in a turbomachinery facility 101 and includes a turbomachine 102 including, without limitation, a gas turbine engine including a compressor and a turbine. Turbomachinery system 100 also includes an auxiliary machine 104 including, without limitation, a gear box. Auxiliary machine 104 is rotatably coupled to turbomachine 102 through a first shaft 106. Turbomachinery system 100 further includes an electrical machine 108 rotatably coupled to auxiliary machine 104 through a second shaft 110. In the exemplary embodiment, electrical machine 108 is a generator 112, turbomachine 102 is a prime mover for generator 112, and turbomachine facility 101 is an electrical power generation facility configured to supply electricity to a grid 114 through 3-phase power lines 116. In other embodiments, not shown, turbomachinery system 100 does not include auxiliary machine 104 and second shaft 110, and turbomachine 102 is rotatably coupled to generator 112 through first shaft 106.

Turbomachinery system 100, in the exemplary embodiment, includes an actuator 118 coupled to second shaft 110 proximate generator 112. In other embodiments, not shown, actuator 118 is coupled to second shaft 110 distal generator 112 including, without limitation, proximate auxiliary machine 104. In still other embodiments, not shown, at least one additional actuator 118 is coupled to at least one of first shaft 106, second shaft 110, and additional shafts rotatably coupled to at least one of turbomachine 102, electrical machine 108, and auxiliary machine 104. Turbomachinery system 100, in the exemplary embodiment, includes an actuator power converter 120 coupled to actuator 118 through at least one actuator electrical line 122. Actuator power converter 120 is an alternating current (AC) power converter including, without limitation, at least one of a direct current (DC)-to-AC power converter and an AC-to-AC power converter, and actuator 118 is an AC actuator. A power supply 124 including, without limitation, at least one of a DC power supply and an AC power supply, is coupled to actuator power converter 120 through at least one actuator electrical line 122. Furthermore, an actuator controller 126 is coupled to actuator 118. Actuator controller 126 is further coupled to at least one of actuator power converter 120 and power supply 124. In other embodiments, not shown, one actuator 118 of a plurality of actuators 118 is coupled to one respective actuator controller 126 of a plurality of actuator controllers 126. In still other embodiments, not shown, one sensor 128 of a plurality of sensors 128 is coupled to more than one actuator controller 126 of a plurality of actuator controllers 126.

Turbomachinery system 100, in the exemplary embodiment, includes at least one sensor 128 coupled to actuator controller 126. Sensor 128 is further coupled to at least one of first shaft 106 and second shaft 110 and at least one sensor 128 is further coupled to at least one of generator 112 and 3-phase power lines 116. In other embodiments, not shown, at least one sensor 128 is further coupled to other locations within turbomachinery system 100 other than at least one of first shaft 106, second shaft 110, generator 112, and 3-phase power lines 116.

In operation, in the exemplary embodiment, shafts including, without limitation, first shaft 106 and second shaft 110, of turbomachinery system 100 are susceptible to torsional oscillations during operation of turbomachinery system 100. Sensor 128 is configured to detect a physical characteristic of turbomachinery system 100 representative of torsional oscillations and transmit a control signal 130 to actuator controller 126.

Physical characteristics representative of torsional oscillations of turbomachinery system 100 include, without limitation, at least one of a magnitude, a direction, and a frequency of an axial deflection of at least one of first shaft 106, second shaft 110, and additional shafts rotatably coupled to at least one of turbomachine 102, electrical machine 108, and auxiliary machine 104. Physical characteristics representative of torsional oscillations of turbomachinery system 100 also include, without limitation, at least one of a direction and an angular velocity of a rotation of at least one of first shaft 106, second shaft 110, and additional shafts rotatably coupled to at least one of turbomachine 102, electrical machine 108, and auxiliary machine 104. Physical characteristics representative of torsional oscillations of turbomachinery system 100 also include, without limitation, at least one of a magnitude, a direction, and a frequency of a torque associated with torsional oscillations of at least one of first shaft 106, second shaft 110, and additional shafts rotatably coupled to at least one of turbomachine 102, electrical machine 108, and auxiliary machine 104. Physical characteristics representative of torsional oscillations of turbomachinery system 100 further include, without limitation, at least one of a magnitude, a direction, and a frequency of a current feeding at least one of a rotor winding of electrical machine 108 and a stator winding of electrical machine 108. Physical characteristics representative of torsional oscillations of turbomachinery system 100 also include, without limitation, at least one of a magnitude, a direction, and a frequency of a voltage across electrical terminals of at least one of a rotor winding of electrical machine 108 and a stator winding of electrical machine 108. Physical characteristics representative of torsional oscillations of turbomachinery system 100 further include, without limitation, at least one of a magnitude, a direction, and a frequency of at least one of a vibration and an acceleration associated with at least one of electrical machine 108, turbomachine 102, auxiliary machine 104, actuator 118, first shaft 106, second shaft 110, additional shafts rotatably coupled to at least one of turbomachine 102, electrical machine 108, and auxiliary machine 104, and any other component of turbomachinery system 100 whereupon an occurrence of at least one of vibrations and accelerations is representative of torsional oscillations in turbomachinery system 100. In the exemplary embodiment, sensor 128 includes sensor types configured to detect and measure the aforementioned physical characteristics including, without limitation, deflection sensors, angular velocity sensors, torque sensors, electrical current sensors, voltage potential sensors, electrical frequency sensors, vibration sensors, and acceleration sensors.

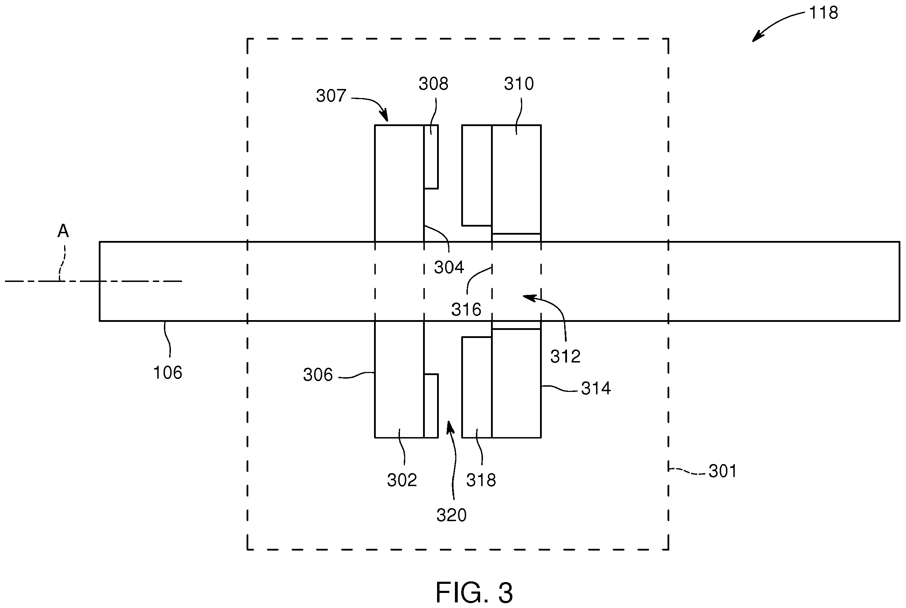

In operation of the exemplary embodiment, actuator 118 is configured to alternately apply and remove a corrective torque to turbomachinery system 100 shafts including, without limitation, first shaft 106 and second shaft 110, as further shown and described below with reference to FIGs. 3-7. Receipt of control signal 130 including, without limitation, receipt of control signal 130 in real-time, by actuator controller 126 is indicative of a presence of torsional oscillations within turbomachinery system 100. In the exemplary embodiment, control signal 130 contains data having a first value when torsional oscillations are present in turbomachinery system 100, and control signal 130 contains data having a second value different from the first value when torsional oscillations are not present in turbomachinery system 100.

In operation of the exemplary embodiment, receipt of control signal 130 having the first value by actuator controller 126 enables a flow of electrical current from power supply 124 to actuator 118 and thereby enables application of corrective torque by actuator 118 by energizing actuator 118. Further, receipt of control signal 130 having the second value by actuator controller 126 disables the flow of electrical current from power supply 124 to actuator 118 and thereby removes corrective torque by actuator 118 by de-energizing actuator 118, as further described below with reference to FIGs. 3-7. In other embodiments, not shown, control signal 130 contains only the first value of data indicative of torsional oscillations in turbomachinery system 100, and control signal 130 is absent and contains no data when torsional oscillations are absent in turbomachinery system 100. In still other embodiments, control signal 130 contains a range of varying data values which not only indicate presence of torsional oscillations in turbomachinery system 100, but also quantify properties of torsional oscillations, e.g., for operational trending purposes. In yet other embodiments, not shown, actuator controller 126 is configured to adjust flow of electrical current from at least one of power supply 124 and actuator power converter 120 to actuator 118 between a range of values including 0 (zero) amps to enable application of an amount of corrective torque by actuator 118 between a range of values including 0 newton·meters depending on an intensity of torsional oscillations requiring corrective torque.

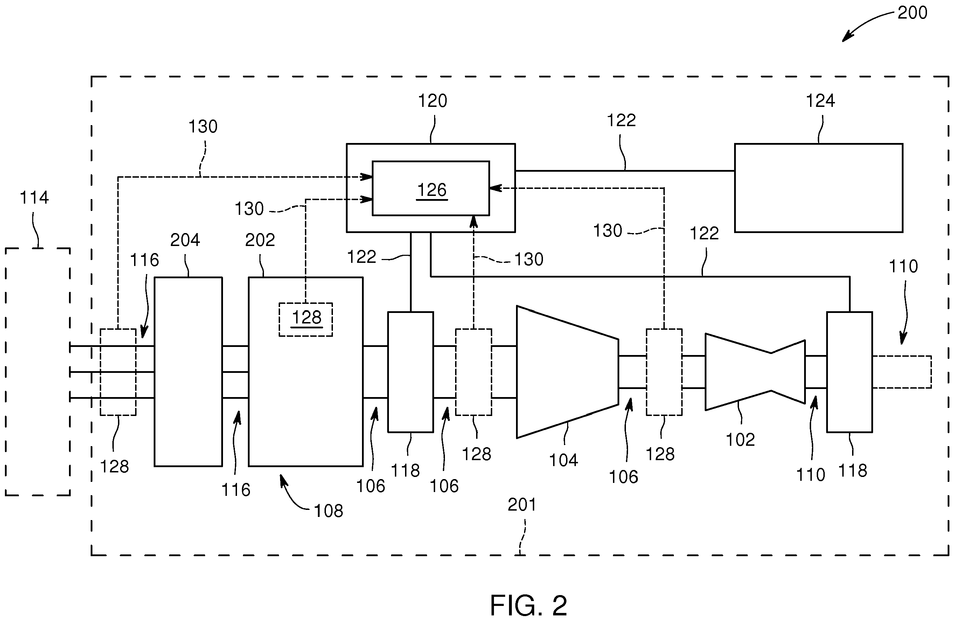

FIG. 2 is a schematic diagram of an alternative turbomachinery system 200. In this alternative embodiment, turbomachinery system 200 is situated in a turbomachinery facility 201. Turbomachinery system 200 includes electrical machine 108, i.e., a motor 202 including, without limitation, a 3-phase motor. Turbomachinery system 200 also includes a motor power converter 204 coupled to grid 114 through 3-phase power lines 116. Motor power converter 204 is further coupled to motor 202 through 3-phase power lines 116. Further, turbomachinery system 200 includes auxiliary machine 104 including, without limitation, a compressor for process fluid. Auxiliary machine 104 is rotatably coupled to motor 202 through first shaft 106 which extends through auxiliary machine 104 and is rotatably coupled to turbomachine 102. In other embodiments, not shown, first shaft 106 does not extend through auxiliary machine 104 and at least one other shaft besides first shaft 106 is rotatably coupled to and between auxiliary machine 104 and turbomachine 102 in turbomachinery system 200. In this alternative embodiment, second shaft 110 is rotatably coupled to and between turbomachine 102 and additional rotating machines (not shown) downstream of turbomachine 102 in turbomachinery system 200. As such, turbomachine facility 201 is a compression train.

Turbomachinery system 200 includes actuator 118 coupled to first shaft 106 proximate motor 202. In other embodiments, not shown, actuator 118 is coupled to first shaft 106 distal motor 202 including, without limitation, proximate auxiliary machine 104. In still other embodiments, not shown, at least one additional actuator 118 is coupled to at least one of first shaft 106, second shaft 110, and additional shafts rotatably coupled to at least one of turbomachine 102, electrical machine 108, and auxiliary machine 104. Further, turbomachinery system 200 includes, in this alternative embodiment, actuator power converter 120 coupled to actuator 118 through at least one actuator electrical line 122. Actuator power converter 120 is an AC power converter including, without limitation, at least one of a DC-to-AC power converter and an AC-to-AC power converter, and actuator 118 is an AC actuator. Power supply 124, including, without limitation, at least one of a DC power supply and an AC power supply, is coupled to actuator power converter 120 through actuator electrical line 122. Actuator controller 126 is coupled to actuator 118 and to at least one of actuator power converter 120 and power supply 124. In other embodiments, not shown, one actuator 118 of a plurality of actuators 118 is coupled to one respective actuator controller 126 of a plurality of actuator controllers 126. In still other embodiments, not shown, one sensor 128 of a plurality of sensors 128 is coupled to more than one actuator controller 126 of a plurality of actuator controllers 126.

Turbomachinery system 200 further includes at least one sensor 128 coupled to actuator controller 126. Sensor 128 is further coupled to at least one of first shaft 106 and second shaft 110 and at least one sensor 128 is further coupled to at least one of motor 202 and 3-phase power lines 116. In other embodiments, not shown, at least one sensor 128 is further coupled to other locations within turbomachinery system 200 other than at least one of first shaft 106, second shaft 110, motor 202, and 3-phase power lines 116.

Shafts including, without limitation, first shaft 106 and second shaft 110, of turbomachinery system 200 are susceptible to torsional oscillations during operation of turbomachinery system 200. Sensor 128 is configured to detect a physical characteristic of turbomachinery system 200 representative of torsional oscillations and transmit control signal 130 to actuator controller 126. These physical characteristics representative of torsional oscillations of turbomachinery system 200 include, without limitation, at least one of a magnitude, a direction, and a frequency of an axial deflection of at least one of first shaft 106, second shaft 110, and additional shafts rotatably coupled to at least one of turbomachine 102, electrical machine 108, and auxiliary machine 104.

Physical characteristics representative of torsional oscillations of turbomachinery system 200 also include, without limitation, at least one of a direction and an angular velocity of a rotation of at least one of first shaft 106, second shaft 110, and additional shafts rotatably coupled to at least one of turbomachine 102, electrical machine 108, and auxiliary machine 104. Physical characteristics representative of torsional oscillations of turbomachinery system 200 also include, without limitation, at least one of a magnitude, a direction, and a frequency of a torque associated with torsional oscillations of at least one of first shaft 106, second shaft 110, and additional shafts rotatably coupled to at least one of turbomachine 102, electrical machine 108, and auxiliary machine 104. Physical characteristics representative of torsional oscillations of turbomachinery system 200 further include, without limitation, at least one of a magnitude, a direction, and a frequency of a current feeding at least one of a rotor winding of electrical machine 108 and a stator winding of electrical machine 108. Physical characteristics representative of torsional oscillations of turbomachinery system 200 also include, without limitation, at least one of a magnitude, a direction, and a frequency of a voltage across electrical terminals of at least one of a rotor winding of electrical machine 108 and a stator winding of electrical machine 108. Physical characteristics representative of torsional oscillations of turbomachinery system 200 further include, without limitation, at least one of a magnitude, a direction, and a frequency of at least one of a vibration and an acceleration associated with at least one of electrical machine 108, turbomachine 102, auxiliary machine 104, actuator 118, first shaft 106, second shaft 110, additional shafts rotatably coupled to at least one of turbomachine 102, electrical machine 108, and auxiliary machine 104, and any other component of turbomachinery system 200 whereupon an occurrence of at least one of vibrations and accelerations is representative of torsional oscillations in turbomachinery system 200. Sensor 128 includes sensor types configured to detect and measure the aforementioned physical characteristics including, without limitation, deflection sensors, angular velocity sensors, torque sensors, electrical current sensors, voltage potential sensors, electrical frequency sensors, vibration sensors, and acceleration sensors.

In operation of this alternative embodiment, actuator 118 is configured to alternately apply and remove a corrective torque to turbomachinery system 200 shafts including, without limitation, first shaft 106 and second shaft 110, as further shown and described below with reference to FIGs. 3-7. Receipt of control signal 130 including, without limitation, rcccipt of control signal 130 in real-time, by actuator controller 126 is indicative of a presence of torsional oscillations within turbomachinery system 200. In this alternative embodiment, control signal 130 contains data having a first value when torsional oscillations are present in turbomachinery system 200, and control signal 130 contains data having a second value different from the first value when torsional oscillations are not present in turbomachinery system 200.

In operation of this alternative embodiment, receipt of control signal 130 having the first value by actuator controller 126 enables a flow of electrical current from power supply 124 to actuator 118 and thereby enables application of corrective torque by actuator 118 by energizing actuator 118. Further, receipt of control signal 130 having the second value by actuator controller 126 disables the flow of electrical current from power supply 124 to actuator 118 and thereby removes corrective torque by actuator 118 by de-energizing actuator 118, as further described below with reference to FIGs. 3-7. In other embodiments, not shown, control signal 130 contains only the first value of data indicative of torsional oscillations in turbomachinery system 200, and control signal 130 is absent and contains no data when torsional oscillations are absent in turbomachinery system 200. In still other embodiments, control signal 130 contains a range of varying data values which not only indicate presence of torsional oscillations in turbomachinery system 200, but also quantify properties of torsional oscillations, e.g., for operational trending purposes. In yet other embodiments, not shown, actuator controller 126 is configured to adjust flow of electrical current from at least one of power supply 124 and actuator power converter 120 to actuator 118 between a range of values including 0 amps to enable application of an amount of corrective torque by actuator 118 between a range of values including 0 newton·meters depending on intensity of torsional oscillations requiring corrective torque.

FIG. 3 is a cross-sectional view of an exemplary actuator 118 that may be used in turbomachinery system 100 and turbomachinery system 200 shown in FIGs. 1 and 2, respectively. In the exemplary embodiment, actuator 118 is configured as an axial flux machine 301 and includes a rotor 302 coupled to first shaft 106. Rotor 302 includes a first rotor side 304 and a second rotor side 306 opposite first rotor side 304. First rotor side 304 and second rotor side 306 extend radially outward from an axis A of first shaft 106 to a rotor circumference 307 of rotor 302. Rotor 302 also includes a plurality of rotor magnetic field-generating elements 308 coupled to first rotor side 304. The plurality of rotor magnetic field-generating elements 308, in the exemplary embodiment, includes a plurality of permanent magnets, e.g., formed of a ferromagnetic material. In other embodiments, not shown, the plurality of rotor magnetic field-generating elements 308 include a type of magnetic field-generating elements other than permanent magnets including, without limitation, a plurality of rotor electromagnetic elements coupled to an electrical power source coupled and configured to energize the plurality of rotor electromagnetic elements. In the exemplary embodiment, the plurality of rotor magnetic field-generating elements 308 are coupled to first rotor side 304 in a substantially radial arrangement and with a predetermined spacing including, without limitation, an equidistant spacing, between each rotor magnetic field-generating element 308 of the plurality of rotor magnetic field-generating elements 308.

Axial flux machine 301, in the exemplary embodiment, includes a stator 310 extending circumferentially around first shaft 106 proximate rotor 302. Stator 310 also includes a cavity 312 defined therethrough. Stator 310 is not coupled to first shaft 106, but rather cavity 312 of stator 310 is configured to receive first shaft 106 and facilitate rotation of first shaft 106 within cavity 312. Stator 310, in the exemplary embodiment, is a stator disk having a stator circumference 313, and cavity 312 is defined in the center thereof with a cavity circumference defined substantially equidistant from axis A of first shaft 106. Stator 310 also includes a first stator side 314 and a second stator side 316 opposite first stator side 314. Second stator side 316 is positioned proximate first rotor side 314, and first stator side 314 and second stator side 316 extend radially inward from stator circumference 313 to cavity 312.

Stator 310 further includes a plurality of stator magnetic field-generating elements 318 coupled to second stator side 316. In the exemplary embodiment, the plurality of stator magnetic field-generating elements 318 are coupled to second stator side 316 in a substantially radial arrangement and with a predetermined spacing including, without limitation, an equidistant spacing, between each stator magnetic field-generating element 318 of the plurality of stator magnetic field-generating elements 318. Stator magnetic field-generating elements 318 are positioned proximate rotor magnetic field-generating 308 elements to define an air gap 320 therebetween.

In operation, stator magnetic field-generating elements 318 are coupled to at least one of actuator power converter 120, actuator controller 126, and power supply 124 (not shown). Stator 310 is an AC stator configured to induce a rotating magnetic field through the plurality of stator magnetic field-generating elements 318. Stator magnetic field-generating elements 318 are configured to alternately energize and de-energize to alternately apply and remove, respectively, corrective torque to shafts of at least one of turbomachinery system 100 and turbomachinery system 200 including, without limitation, first shaft 106, second shaft 110, and additional shafts rotatably coupled to at least one of turbomachine 102, electrical machine 108, and auxiliary machine 104. Rotating magnetic field through the plurality of stator magnetic field-generating elements 318 is induced when energized by the flow of electrical current thereto from at least one of power supply 124 and actuator power converter 120. Stator 310 is also configured to apply corrective torque to first shaft 106 in both a clockwise direction and a counterclockwise direction, depending on an alignment of phases of AC power transmitted to stator 310 on actuator electrical line 122 (not shown). In other embodiments, not shown, stator 310 is configured to apply corrective torque to first shaft 106 in only one of a clockwise and a counterclockwise direction. Also, in operation, disabling the flow of electrical current to stator 310 de-energizes the plurality of stator magnetic field-generating elements 318 and removes corrective torque from first shaft 106.

In operation of the exemplary embodiment, rotating magnetic field through plurality of stator magnetic field-generating elements 318 interacts clcctromcchanically through air gap 320 with plurality of rotor magnetic field generating elements 308 on rotor 302. Depending on the direction at which stator 310 rotating magnetic field rotates, at least one of a clockwise and a counterclockwise corrective torque is applied to first shaft 106 to dampen torsional oscillations thereof. An amount of corrective torque applied by axial flux machine 301 to first shaft 106 by energizing stator 310 is dictated by user-determined parameters of turbomachinery system 100. User-determined parameters include, without limitation, parameters that depend on data contained in control signal 130. User-determined parameters also include, without limitation, design parameters of at least one of turbomachinery system 100, electrical machine 108, actuator power converter 120, and actuator controller 126. User-predetermined parameters further include, without limitation, a time, a magnetic flux intensity, and a magnetic field strength of an induced magnetic field including, without limitation, rotating magnetic field through the plurality of stator magnetic field-generating elements 318.

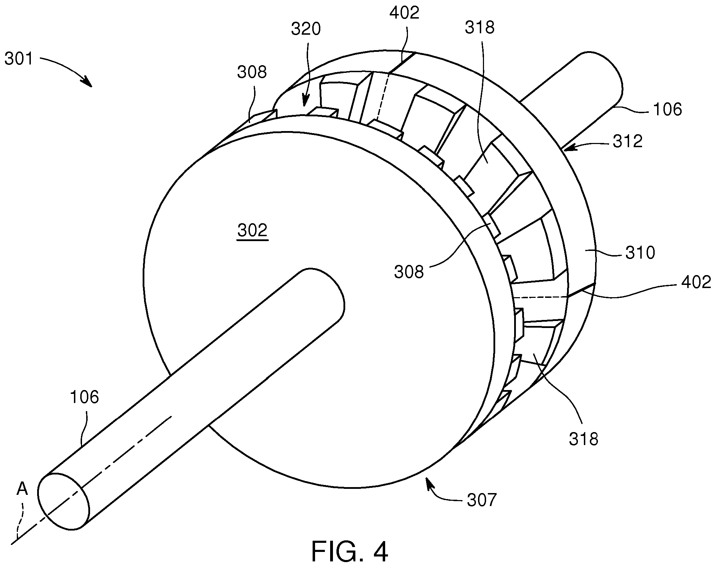

FIG. 4 is a perspective view of an exemplary axial flux machine 301 actuator 118 that may be used in turbomachinery system 100 and turbomachinery system 200 shown in FIGs. 1 and 2. In the exemplary embodiment, stator 310 of axial flux machine 301 includes at least one detachment link 402 and stator 310 is coupled to at least one of turbomachinery system 100 and turbomachinery system 200. Detachment link 402 defines at least one section of stator 310 including, without limitation, an arcuate portion of stator disk. Detachment link 402 is configured to facilitate removal of stator 310 from first shaft 106 without necessitating at least one of disassembling and decoupling axial flux machine 301 from at least one of turbomachinery system 100 and turbomachinery system 200. Detachment link 402 is also configured to facilitate at least one of reassembling and recoupling stator 310 to first shaft 106 of at least one of turbomachinery system 100 and turbomachinery system 200 following user-initiated activities including, without limitation, maintenance of at least one of first shaft 106, rotor 302, stator 310, electrical machine 108, auxiliary machine 104, and turbomachine 102.

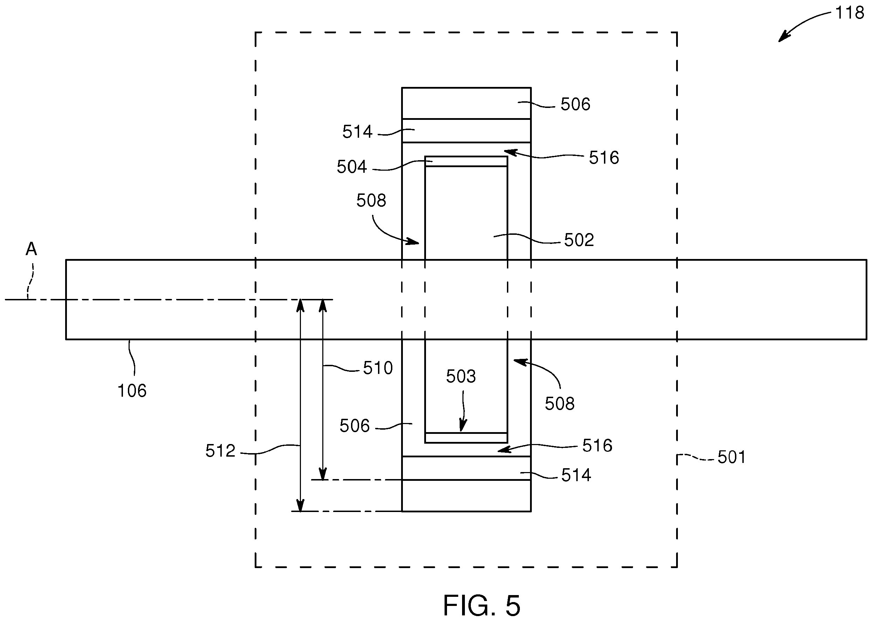

FIG. 5 is a cross-scctional view of an alternative actuator 118 that may be used in turbomachinery system 100 and turbomachinery system 200 shown in FIGs. 1 and 2. In this alternative embodiment, actuator 118 is configured as a radial flux machine 501. Radial flux machine 501 includes a rotor 502 coupled to first shaft 106. Rotor 502 extends as a rotor disk radially outward from axis A of first shaft 106 to a rotor circumference 503 of rotor 502. Rotor 502 also includes a plurality of rotor magnetic field-generating elements 504 coupled to rotor circumference 503. In other embodiments, not shown, the plurality of rotor magnetic field-generating elements 504 are coupled to first shaft 106, radial flux machine 501 does not include rotor 502, and first shaft 106 functions as a shaft-integrated rotor. The plurality of rotor magnetic field-generating elements 504, in this alternative embodiment, includes a plurality of permanent magnets, e.g., formed of ferromagnetic material. In other embodiments, not shown, the plurality of rotor magnetic field-generating elements 504 include type of magnetic field-generating elements other than permanent magnets including, without limitation, a plurality of rotor electromagnetic elements coupled to an electrical power source coupled thereto and configured to energize the plurality of rotor electromagnetic elements. The plurality of rotor magnetic field-generating elements 504, in this alternative embodiment, are coupled to rotor circumference 503 in a substantially axial arrangement and with a predetermined spacing including, without limitation, an equidistant spacing, between each rotor magnetic field-generating element 504 of the plurality of rotor magnetic field-generating elements 504.

Radial flux machine 501 includes a stator 506 embodied in an annular ring extending substantially circumferentially around first shaft 106 proximate rotor 502. Stator 506 defines a cavity 508. Stator 506 is not coupled to first shaft 106, but rather stator 506 is configured to receive first shaft 106 and rotor 502 and facilitate rotation of rotor 502 and first shaft 106 within cavity 508. Stator 506 also includes a stator circumference 509. Stator 506 annular ring also includes an inner radius 510 defined between axis A and a radially inward surface of stator 506 annular ring. Inner radius 510 also defines a radially outward boundary of cavity 508 and, in this alternative embodiment, cavity 508 is embodied in an annular cavity through stator 506. Stator 506 also includes an outer radius 512 defined between axis A and stator circumference 509.

Stator 506 further includes a plurality of stator magnetic field-generating elements 514 positioned, including coupled to, a radially inward side of stator 506 annular ring along inner radius 510. The plurality of stator magnetic field-generating elements 514 are coupled to stator 506 annular ring along inner radius 510 in a substantially axial arrangement and with a predetermined spacing including, without limitation, an equidistant spacing, between each stator magnetic field-generating element 514 of the plurality of stator magnetic field-generating elements 514. Stator magnetic field-generating elements 514 are positioned proximate rotor magnetic field-generating elements 504 to facilitate defining an air gap 516 therebetween.

In operation, stator magnetic field-generating elements 514 are coupled to at least one of actuator power converter 120, actuator controller 126, and power supply 124 (not shown). Stator 506 is an AC stator configured to induce a rotating magnetic field through the plurality of stator magnetic field-generating elements 514. Stator magnetic field-generating elements 514 are configured to alternately energize and de-energize to alternately apply and remove, respectively, corrective torque to shafts of at least one of turbomachinery system 100 and turbomachinery system 200 including, without limitation, first shaft 106, second shaft 110, and additional shafts rotatably coupled to at least one of turbomachine 102, electrical machine 108, and auxiliary machine 104.

Rotating magnetic field through the plurality of stator magnetic field-generating elements 514 is induced when energized by the flow of electrical current thereto from at least one of power supply 124 and actuator power converter 120. Stator 506 is also configured to apply corrective torque to first shaft 106 in both a clockwise direction and a counterclockwise direction, depending on an alignment of phases of AC power transmitted to stator 506 on actuator electrical line 122 (not shown). In other embodiments, not shown, stator 506 is further configured to apply corrective torque to first shaft 106 in only one of a clockwise and a counterclockwise direction. Also, in operation, disabling the flow of electrical current to stator 506 de-energizes the plurality of stator magnetic field-generating elements 514 and removes corrective torque from first shaft 106.

In operation of this alternative embodiment, rotating magnetic field through plurality of stator magnetic field-generating elements 514 interacts electromechanically through air gap 516 with plurality of rotor magnetic field generating elements 504 on rotor 502. Depending on the direction at which stator 506 rotating magnetic field rotates, at least one of a clockwise and a counterclockwise corrective torque is applied to first shaft 106 to dampen torsional oscillations thereof. An amount of corrective torque applied by radial flux machine 501 to first shaft 106 by energizing stator 506 is dictated by user-determined parameters of at least one of turbomachinery system 100 and turbomachinery system 200. User-determined parameters include, without limitation, parameters that depend on data contained in control signal 130. User-determined parameters also include, without limitation, design parameters of at least one of turbomachinery system 200, electrical machine 108, actuator power converter 120, and actuator controller 126. User-predetermined parameters further include, without limitation, a time, a magnetic flux intensity, and a magnetic field strength of an induced magnetic field including, without limitation, rotating magnetic field through the plurality of stator magnetic field-generating elements 514.

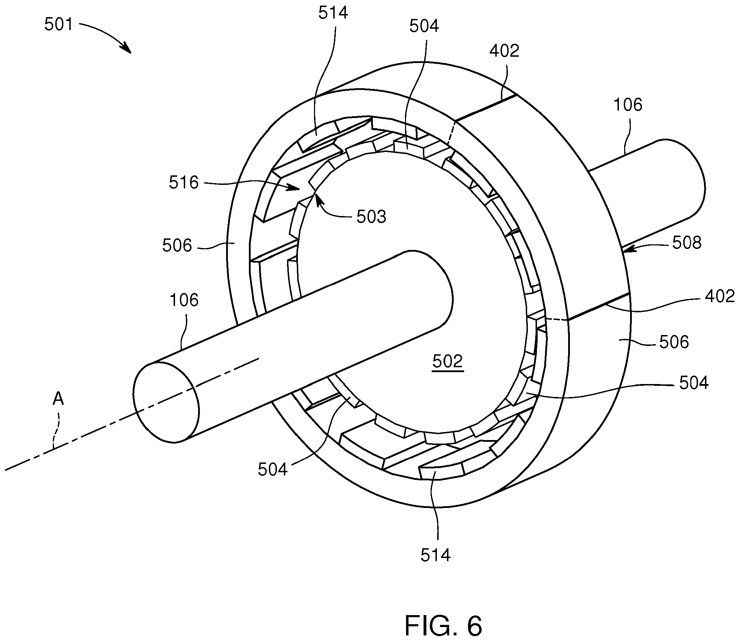

FIG. 6 is a perspective view of an exemplary radial flux machine 501 actuator 118 that may be used in turbomachinery system 100 and turbomachinery system 200 shown in FIGs. 1 and 2. In the exemplary embodiment, stator 506 of radial flux machine 501 includes at least one detachment link 402 and stator 506 is coupled to at least one of turbomachinery system 100 and turbomachinery system 200. Detachment link 402 defines at least one section of stator 506 including, without limitation, an arc segment of stator 506 annular ring. Detachment link 402 is configured to facilitate removal of stator 506 from first shaft 106 without necessitating at least one of disassembling and decoupling radial flux machine 501 from at least one of turbomachinery system 100 and turbomachinery system 200. Detachment link 402 is also configured to facilitate at least one of reassembling and recoupling stator 506 to first shaft 106 of at least one of turbomachinery system 100 and turbomachinery system 200 following user-initiated activities including, without limitation, maintenance of at least one of first shaft 106, rotor 502, stator 506, electrical machine 108, auxiliary machine 104, and turbomachine 102.

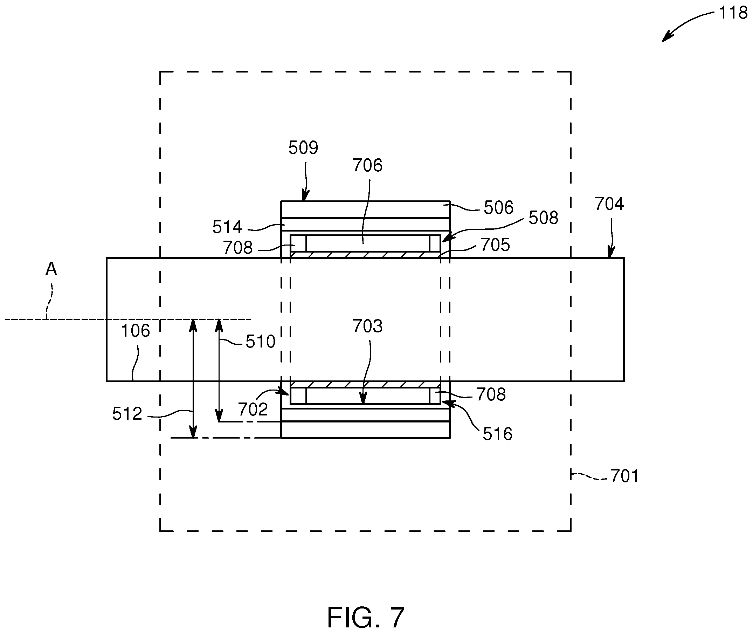

FIG. 7 is a cross-sectional view of an alternative actuator 118 that may be used in turbomachinery system 100 and turbomachinery system 200 shown in FIGs. 1 and 2. In this alternative embodiment, actuator 118 is embodied in a squirrel cage induction motor, and actuator 118 is configured as a radial flux machine 701 including an annular squirrel cage rotor 702 coupled to first shaft 106. Squirrel cage rotor 702 extends as a rotor cage radially outward from axis A of first shaft 106 to a rotor circumference 703 of squirrel cage rotor 702. Squirrel cage rotor 702 is coupled to a shaft circumference 704 through a coupling layer 705 including, without limitation, a thermoplastic-based adhesive layer having a lower thermal conductivity than both of first shaft 106 and squirrel cage rotor 702. In other embodiments, not shown, squirrel cage rotor 702 is coupled to shaft circumference 704 as a caged sleeve structure that is coupled to shaft circumference 704 not through coupling layer 705, but rather through coupling processes including, without limitation, welding, thermal expansion, thermal contraction, molding, and extrusion. Squirrel cage rotor 702 also includes a plurality of cross bars 706 formed of a conductive material. The plurality of cross bars 706 are coupled to and extend between at least two annular rotor rings 708. In other embodiments, not shown, squirrel cage rotor 702 is instead embodied in a plurality of cross bars 706 formed of a ferromagnetic material, e.g., permanent magnets, coupled to shaft circumference 704 without rotor ring 708.

In operation, stator magnetic field-generating elements 514 are coupled to at least one of actuator power converter 120, actuator controller 126, and power supply 124 (not shown). Stator 506 is an AC stator configured to induce a rotating magnetic field through the plurality of stator magnetic field-generating elements 514. Stator magnetic field-generating elements 514 are configured to alternately energize and de-energize to alternately apply and remove, respectively, corrective torque to shafts of at least one of turbomachinery system 100 and turbomachinery system 200 including, without limitation, first shaft 106, second shaft 110, and additional shafts rotatably coupled to at least one of turbomachine 102, electrical machine 108, and auxiliary machine 104. Rotating magnetic field through the plurality of stator magnetic field-generating elements 514 is induced when energized by the flow of electrical current thereto from at least one of power supply 124 and actuator power converter 120. Stator 506 is also configured to apply corrective torque to first shaft 106 in both a clockwise direction and a counterclockwise direction, depending on an alignment of phases of AC power transmitted to stator 506 on actuator electrical line 122 (not shown). In other embodiments, not shown, stator 506 is further configured to apply corrective torque to first shaft 106 in only one of a clockwise and a counterclockwise direction. Also, in operation, disabling the flow of electrical current to stator 506 de-energizes the plurality of stator magnetic field-generating elements 514 and removes corrective torque from first shaft 106.

In operation of this alternative embodiment, rotating magnetic field through plurality of stator magnetic field-generating elements 514 interacts electromechanically through air gap 516 with squirrel cage rotor 702 to induce a flow of electrical current through cross bars 706 and rotor rings 708, thereby inducing a magnetic field and an electromagnetic torque therein. Depending on the direction at which stator 506 rotating magnetic field rotates, at least one of a clockwise and a counterclockwise corrective torque is applied to first shaft 106 to dampen torsional oscillations thereof. An amount of corrective torque applied by radial flux machine 701 to first shaft 106 by energizing stator 506 is dictated by user-determined parameters of at least one of turbomachinery system 100 and turbomachinery system 200. User-determined parameters include, without limitation, parameters that depend on data contained in control signal 130. User-determined parameters also include, without limitation, design parameters of at least one of turbomachinery system 200, electrical machine 108, actuator power converter 120, and actuator controller 126. User-predetermined parameters further include, without limitation, a time, a magnetic flux intensity, and a magnetic field strength of an induced magnetic field including, without limitation, rotating magnetic field through the plurality of stator magnetic field-generating elements 514.

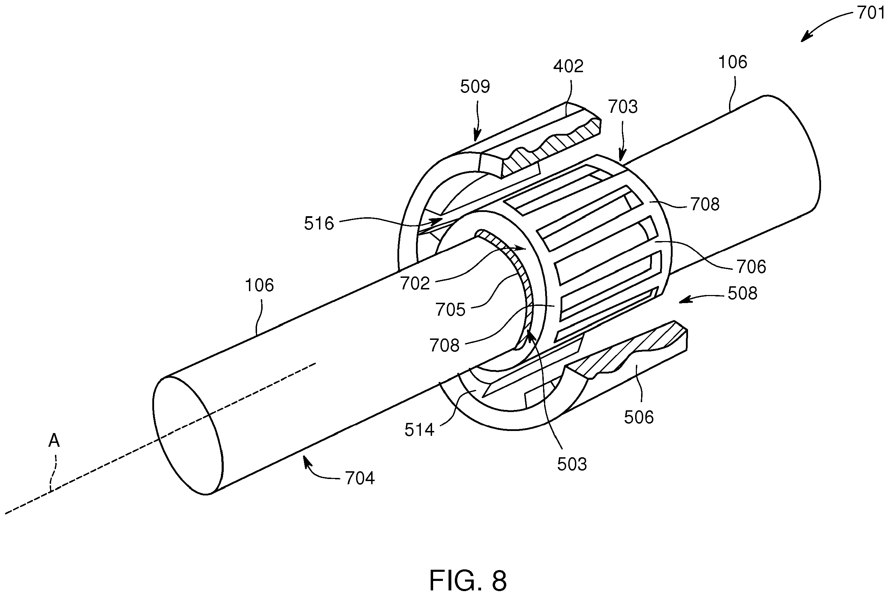

FIG. 8 is a perspective view of an alternative radial flux machine 701 actuator 118 that may be used in turbomachinery system 100 and turbomachinery system 200 shown in FIGs. 1 and 2. In this alternative exemplary embodiment, stator 506 (shown in a partial section view) of radial flux machine 701 includes at least one detachment link 402 and stator 506 is coupled to at least one of turbomachinery system 100 and turbomachinery system 200. Detachment link 402 defines at least one section of stator 506 including, without limitation, an arc segment of stator 506 annular ring. Detachment link 402 is configured to facilitate removal of stator 506 from first shaft 106 without necessitating at least one of disassembling and decoupling radial flux machine 701 from at least one of turbomachinery system 100 and turbomachinery system 200. Detachment link 402 is also configured to facilitate at least one of reassembling and recoupling stator 506 to first shaft 106 of at least one of turbomachinery system 100 and turbomachinery system 200 following user-initiated activities including, without limitation, maintenance of at least one of first shaft 106, squirrel cage rotor 702, stator 506, electrical machine 108, auxiliary machine 104, and turbomachine 102.

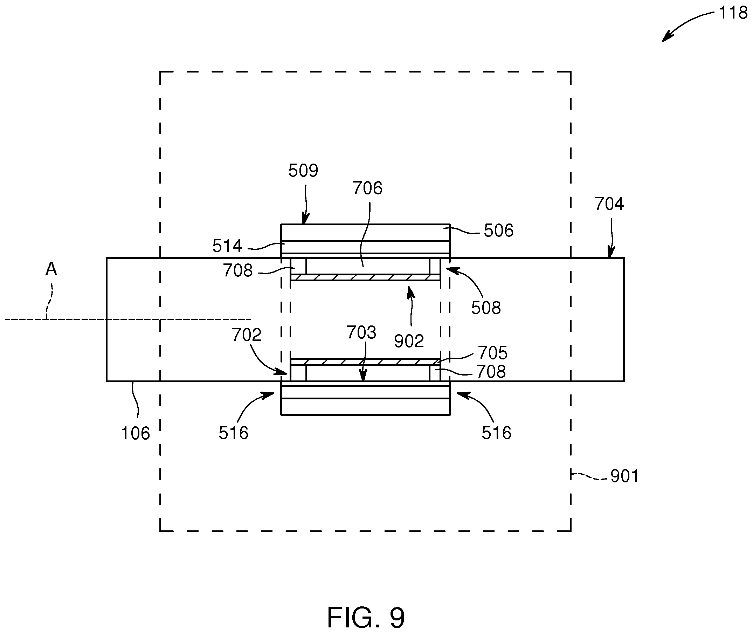

FIG. 9 is a cross-sectional view of an alternative actuator 118 that may be used in turbomachinery system 100 and turbomachinery system 200 shown in FIGs. 1 and 2. In this alternative embodiment, actuator 118 is embodied in squirrel cage induction motor, and actuator 118 is configured as a radial flux machine 901 including squirrel cage rotor 702 coupled to first shaft 106. Squirrel cage rotor 702 extends as a rotor cage radially outward from axis A of first shaft 106 to rotor circumference 703 of squirrel cage rotor 702. Rotor circumference 703, in this alternative embodiment, is substantially flush with shaft circumference 704, and first shaft 106 includes a slot 902 defined circumferentially therein. Squirrel cage rotor 702 is positioned in slot 902 and coupled to first shaft 106 through coupling layer 705 including, without limitation, a thermoplastic-based adhesive layer having a lower thermal conductivity than both of first shaft 106 and squirrel cage rotor 702. In other embodiments, not shown, squirrel cage rotor 702 is positioned in slot 902 and coupled to first shaft 106 by construction of squirrel cage rotor 702 piece-wise within slot 902, with slot 902 defined in first shaft 106 one of before or after installation of first shaft 106 in at least one of turbomachinery system 100 and turbomachinery system 200. In still other embodiments, not shown, squirrel cage rotor 702 is positioned in slot 902 and coupled to first shaft 106 not through coupling layer 705, but rather through coupling processes including, without limitation, welding, thermal expansion, thermal contraction, molding, and extrusion. Squirrel cage rotor 702 also includes the plurality of cross bars 706 formed of a conductive material and coupled to and extend between at least two annular rotor rings 708, as shown and described above with reference to FIGs. 7 and 8. In other embodiments, not shown, squirrel cage rotor 702 is instead embodied in the plurality of cross bars 706 formed of a ferromagnetic material, e.g., permanent magnets, positioned in slot 902 and coupled to first shaft 106 without rotor ring 708.

In operation, stator magnetic field-generating elements 514 (not shown) are coupled to at least one of actuator power converter 120, actuator controller 126, and power supply 124 (not shown). Stator 506 is an AC stator configured to induce a rotating magnetic field through the plurality of stator magnetic field-generating elements 514. Stator magnetic field-generating elements 514 are configured to alternately energize and de-energize to alternately apply and remove, respectively, corrective torque to shafts of at least one of turbomachinery system 100 and turbomachinery system 200 including, without limitation, first shaft 106, second shaft 110, and additional shafts rotatably coupled to at least one of turbomachine 102, electrical machine 108, and auxiliary machine 104. Rotating magnetic field through the plurality of stator magnetic field-generating elements 514 is induced when energized by the flow of electrical current thereto from at least one of power supply 124 and actuator power converter 120. Stator 506 is also configured to apply corrective torque to first shaft 106 in both a clockwise direction and a counterclockwise direction, depending on an alignment of phases of AC power transmitted to stator 506 on actuator electrical line 122 (not shown). In other embodiments, not shown, stator 506 is further configured to apply corrective torque to first shaft 106 in only one of a clockwise and a counterclockwise direction. Also, in operation, disabling the flow of electrical current to stator 506 de-energizes the plurality of stator magnetic field-generating elements 514 and removes corrective torque from first shaft 106.

In operation of this alternative embodiment, rotating magnetic field through plurality of stator magnetic field-generating elements 514 interacts electromechanically through air gap 516 with squirrel cage rotor 702 to induce a flow of electrical current through cross bars 706 and rotor rings 708, thereby inducing a magnetic field and an electromagnetic torque therein. Depending on the direction at which stator 506 rotating magnetic field rotates, at least one of a clockwise and a counterclockwise corrective torque is applied to first shaft 106 to dampen torsional oscillations thereof. An amount of corrective torque applied by radial flux machine 901 to first shaft 106 by energizing stator 506 is dictated by user-determined parameters of at least one of turbomachinery system 100 and turbomachinery system 200. User-determined parameters include, without limitation, parameters that depend on data contained in control signal 130. User-determined parameters also include, without limitation, design parameters of at least one of turbomachinery system 200, electrical machine 108, actuator power converter 120, and actuator controller 126. User-predetermined parameters further include, without limitation, a time, a magnetic flux intensity, and a magnetic field strength of an induced magnetic field including, without limitation, rotating magnetic field through the plurality of stator magnetic field-generating elements 514.

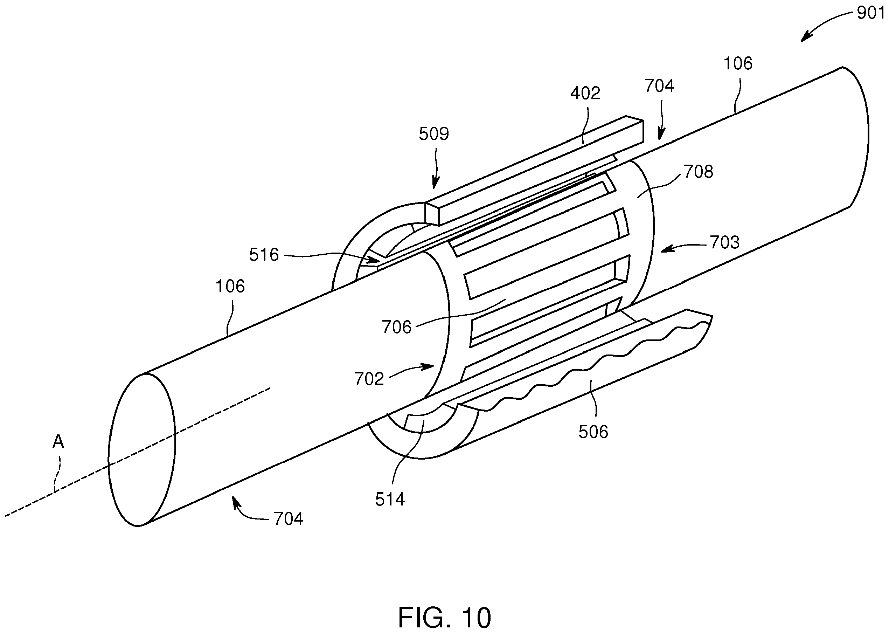

FIG. 10 is a perspective view of an alternative radial flux machine 901 actuator 118 that may be used in turbomachinery system 100 and turbomachinery system 200 shown in FIGs. 1 and 2. In this alternative embodiment, stator 506 (shown in a partial section view) is coupled to at least one of turbomachinery system 100 and turbomachinery system 200. Detachment link 402 defines at least one section of stator 506 including, without limitation, an arc segment of stator 506 annular ring. Detachment link 402 is configured to facilitate removal of stator 506 from first shaft 106 without necessitating at least one of disassembling and decoupling radial flux machine 901 from at least one of turbomachinery system 100 and turbomachinery system 200. Detachment link 402 is also configured to facilitate at least one of reassembling and recoupling stator 506 to first shaft 106 of at least one of turbomachinery system 100 and turbomachinery system 200 following user-initiated activities including, without limitation, maintenance of at least one of first shaft 106, squirrel cage rotor 702, stator 506, electrical machine 108, auxiliary machine 104, and turbomachine 102.

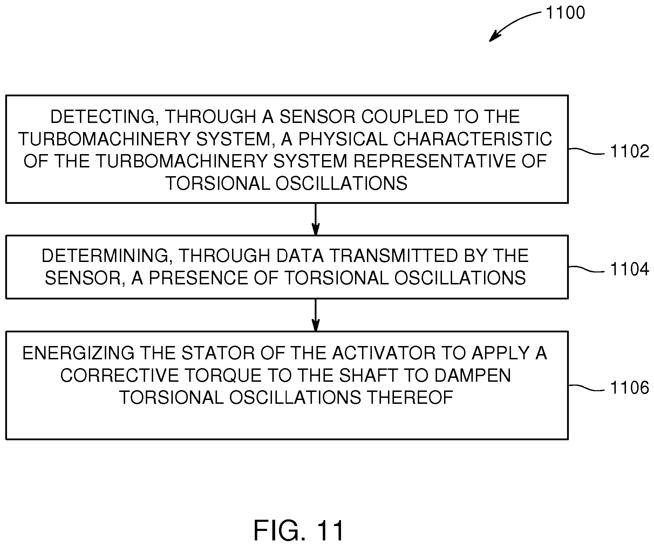

FIG. 11 is a flowchart diagram of an exemplary method 1100 of damping torsional oscillations of a shaft in a turbomachinery system that may be used with turbomachinery system 100 and turbomachinery system 200 shown in FIGs. 1 and 2. Referring to FIGs. 1-10, method 1100 includes detecting 1102, through sensor 128 coupled to at least one of turbomachinery system 100 and turbomachinery system 200, a physical characteristic of at least one of turbomachinery system 100 and turbomachinery system 200 representative of torsional oscillations. Method 1100 also includes determining 1104, through data transmitted by sensor 128, a presence of torsional oscillations. Method 1100 further includes energizing 1106 at least one of stator 310 and stator 506 of actuator 118 to apply a corrective torque to at least one of first shaft 106, second shaft 110, and additional shafts rotatably coupled to at least one of turbomachine 102, electrical machine 108, and auxiliary machine 104, to dampen torsional oscillations thereof.

The above-described electrical actuator devices for reduction of torsional oscillations in turbomachinery systems and associated systems and methods reduce SSTIs of shafts and rotating machinery including electrical machines in rotating equipment trains. The above-described embodiments also mitigate undesirable effects of SSTIs and aberrant torques arising therefrom in turbomachinery systems. The abovc-dcscribcd embodiments further reduce torque imbalances in electrical machines employed in turbomachinery systems. The above-described electrical actuator devices for reduction of torsional oscillations in turbomachinery systems and associated control systems and methods also reduce operating and maintenance costs and increase operational efficiency of turbomachinery systems. The above-described embodiments further provide less complex and less expensive SSTI mitigation devices, systems, and methods that are easier to operate and integrate into existing plant designs. The above-described embodiments also enable installation and maintenance of SSTI mitigation devices and systems without shutting down turbomachinery system operations.

An exemplary technical effect of the above-described electrical actuator devices for reduction of torsional oscillations in turbomachinery systems and associated systems and methods includes at least one of the following: (a) reducing SSTIs of shafts and rotating machinery including electrical machines in rotating equipment trains; (b) mitigating undesirable effects of SSTIs and aberrant torques arising therefrom in turbomachinery systems; (c) reducing torque imbalances in electrical machines employed in turbomachinery systems; (d) reducing operating and maintenance costs and increasing operational efficiency of turbomachinery systems; (e) providing less complex and less expensive SSTI mitigation devices, systems, and methods that are easier to operate and integrate into existing plant designs; and (f) enabling installation and maintenance of SSTI mitigation devices and systems without shutting down turbomachinery system operations.

Exemplary embodiments of electrical actuator devices for reduction of torsional oscillations in turbomachinery systems and associated systems and methods are not limited to the specific embodiments described herein, but rather, components of systems and/or steps of the methods may be utilized independently and separately from other components and/or steps described herein. For example, the methods, systems, and apparatus may also be used in combination with other systems requiring reduction of torsional oscillations of shafts and rotating machinery coupled thereto including, without limitation, rotating machinery trains not including electrical machines, and the associated methods are not limited to practice with only the systems and methods as described herein. Rather, the exemplary embodiments can be implemented and utilized in connection with many other applications, equipment, and systems that may benefit from using the above-described embodiments electrical actuator devices for reduction of torsional oscillations and associated systems and methods to improve the effectiveness and efficiency of operation for rotating machinery trains and other related systems in various applications.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

Some embodiments involve the use of one or more electronic or computing devices. Such devices typically include a processor, processing device, or controller, such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer-readable medium, including, without limitation, a storage device and/or a memory device. Such instructions, when executed by a processing device, cause the processing device to perform at least a portion of the methods described herein. The above examples are exemplary only, and thus are not intended to limit in any way the definition and/or meaning of the term processor and processing device.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A turbomachinery system (100,200) comprising a turbomachine (102) and an electrical machine (108) coupled to the turbomachine by a shaft (106,110) extending therebetween, where said turbomachinery system (100, 200) further comprises an actuator (118) with a rotor (302,502,702) coupled to the shaft (106, 110) and comprising a plurality of rotor magnetic field-generating elements (308,504); and a stator (310,506) configured to receive at least a portion of the shaft (106, 110) proximate said rotor (302, 502, 702), said stator (310, 506) comprising a plurality of stator magnetic field-generating elements (318,514) proximate said plurality of rotor magnetic field-generating elements (308,504), said plurality of stator magnetic field-generating elements (318, 514) configured to alternately energize and de-energize to alternately apply and remove, respectively, a corrective torque to the shaft (106, 110) to dampen torsional oscillations thereof

2. The turbomachinery system (100, 200) in accordance with claim 1, wherein:
said rotor (302,502,702) further comprises a rotor disk (302) having a rotor circumference (307), a first rotor side (304), and a second rotor side (306) opposite the first rotor side (304), each of the first rotor side (304) and the second rotor side (306) extending radially outward from the shaft (106,110) to the rotor circumference (307),
said plurality of rotor magnetic field-generating elements (308) coupled to the first rotor side (304) with a predetermined spacing therebetween; and
said stator (310,506) defines a cavity (312), said stator (310, 506) further configured to receive the at least a portion of the shaft (106, 110) through the cavity (312), said stator (310, 506) further comprising a stator disk (310) having a stator circumference (313), a first stator side (314), and a second stator side (316) opposite the first stator side (314), side, each of the first stator side (314) and the second stator side (316) extending radially inward from the stator circumference (307) to the cavity (312),
said plurality of stator magnetic field-generating elements (318) coupled to the second stator side (316), the second stator side (316) positioned proximate the first rotor side (314) to define an air gap (320) between said plurality of rotor magnetic-field generating elements (308, 504) and said plurality of stator magnetic field-generating elements (318, 514).

3. The turbomachinery sytem (100, 200) in accordance with claim 1 or claim 2, wherein:
said rotor (302,502,702) further comprises a rotor disk (502) having a rotor circumference (503), said plurality of rotor magnetic field-generating elements (504) positioned along the rotor circumference (503) with a predetermined spacing therebetween; and
said stator (310,506) defines a cavity (508), said stator (310, 510) further configured to receive the at least a portion of the shaft (106,110) through the cavity (508), said stator (310, 506) further comprising an annular ring (506) having a stator circumference (509) and an inner radius (510), said plurality of stator magnetic field-generating elements (318, 514) positioned along the inner radius (510) with a predetermined spacing therebetween, said stator (310, 506) positioned proximate said rotor (302, 502, 702) to define an air gap (516) between said plurality of rotor magnetic-field generating elements (308, 504) and said plurality of stator magnetic field-generating elements (318, 514).

4. The turbomachinery system (100, 200) in accordance with any preceding claim, wherein said plurality of rotor magnetic field-generating elements (308, 504) comprises a plurality of permanent magnets.

5. The turbomachinery system in accordance with any preceding claim, wherein said stator (310, 506) further comprises an alternating current stator configured to induce a rotating magnetic field through said plurality of stator magnetic field-generating elements (318, 514).

6. The turbomachinery system (100,200) in accordance with claim 5, wherein:
said rotor (302,502,702) further comprises at least two annular rotor rings (708) coupled circumferentially to said shaft (106,110), said plurality of rotor magnetic field-generating elements (308, 504) coupled to said at least two rotor rings (708) and extending axially therebetween proximate said shaft (106, 110); and
said stator (310,506) defines a cavity (508), said stator (310, 506) further configured to receive said at least a portion of said shaft (106, 110) through the cavity (508), said stator (310, 506) further comprising an annular ring (506) having a stator circumference (509) and an inner radius (510), said plurality of stator magnetic field-generating elements (318, 514) positioned along the inner radius (510) with a predetermined spacing therebetween, said stator (310, 506) positioned proximate said rotor (302, 502, 702) to define an air gap (516) between said plurality of rotor magnetic-field generating elements (308, 504) and said plurality of stator magnetic field-generating elements (318, 514).

7. The turbomachinery system (100,200) in accordance with claim 2. 5 or 6, wherein:
said shaft (106,110) has a shaft circumference (704) and includes a slot (902) defined circumferentially therein; and
said rotor (302,502,702) is positioned in said slot (902) substantially flush with the shaft circumference (704).

8. The turbomachinery system (100,200) in accordance with any of claims 6 to 7, further comprising a coupling layer (705) having a lower thermal conductivity than both of said rotor (702) and said shaft (106,110), said coupling layer (705) positioned between said shaft (106, 110) and at least one of said at least two rotor rings (708) and said plurality of rotor magnetic-field generating elements (308, 504), said rotor coupled to said shaft (106, 110), through said coupling layer (705).

9. The turbomachinery system (100,200) in accordance with any of claims 6 to 8, wherein said stator (310,506) further comprises a detachment link (402) configured to facilitate removal of said stator (310, 506) from said shaft (106, 110).

10. The turbomachinery system (100,200) in accordance with any of claims 6 to 9, further comprising a power supply (124) coupled to said plurality of stator magnetic-field generating elements (318,514), said stator (310,506) further comprising an alternating current (AC) stator (310,506) configured to induce a rotating magnetic field through said plurality of stator magnetic field-generating elements (318, 514).

11. The turbomachinery system (100,200) in accordance with claim 10 further comprising an actuator power converter (120) coupled to said power supply (124) and said actuator (118).

12. The turbomachinery system (100,200) in accordance with any claims 6 to 11, further comprising:
an actuator controller (126) coupled to said actuator (118); and
a sensor (128) coupled to said actuator controller (126), said sensor (128) configured to detect a physical characteristic of said turbomachinery system (100, 200) representative of torsional oscillations and transmit a control signal (130) to said actuator controller (126) to alternately apply and remove the corrective torque to said shaft (106,110) through said actuator (118), wherein said sensor (128) is further coupled to at least one of said turbomachine (102), said electrical machine (108), and said shaft (106, 110).

13. The turbomachinery system (100,200) in accordance with any of claims 6 to 12, , further comprising:
an auxiliary machine (104);
a plurality of shafts (106,110) coupled to said electrical machine (108), said turbomachine (102), and said auxiliary machine (104); and
a plurality of actuators (118) coupled to at least two said shafts (106,110) of said plurality of shafts (106, 110).

14. A method of damping torsional oscillations of a turbomachinery system (100, 200) according to claim 1, said method comprising:
detecting, through a sensor (128), coupled to the turbomachinery system (100, 200), a physical characteristic of the turbomachinery system (100, 200) representative of torsional oscillations;
determining, through data transmitted by the sensor (128), a presence of torsional oscillations; and
energizing the stator (310, 506) of the actuator (118) to apply a corrective torque to the (106, 110) shaft to dampen torsional oscillations thereof.

## Patentansprüche

1. Turbomaschinensystem (100, 200), umfassend eine Turbomaschine (102) und eine elektrische Maschine (108), die mit der Turbomaschine durch eine Welle (106, 110) gekoppelt ist, die sich dazwischen erstreckt, wobei das Turbomaschinensystem (100, 200) ferner einen Aktuator (118) mit einem Rotor (302, 502, 702) umfasst, der mit der Welle (106, 110) gekoppelt ist und eine Vielzahl von Rotor-Magnetfeld-Erzeugungselementen (308, 504) umfasst; und
einen Stator (310, 506), der konfiguriert ist, um zumindest einen Abschnitt der Welle (106, 110) nahe des Rotors (302, 502, 702) aufzunehmen, wobei der Stator (310, 506) eine Vielzahl von Stator-Magnetfeld-Erzeugungselementen (318, 514) nahe der Vielzahl von Rotor-Magnetfeld-Erzeugungselementen (308, 504) umfasst, wobei die Vielzahl von Stator-Magnetfeld-Erzeugungselementen (318, 514) konfiguriert ist, um abwechselnd erregt und entregt zu werden, um abwechselnd ein korrigierendes Drehmoment auf die Welle (106, 110) aufzubringen bzw. davon zu entfernen, um deren Torsionsschwingungen zu dämpfen.

2. Turbomaschinensystem (100, 200) nach Anspruch 1, wobei:
der Rotor (302, 502, 702) ferner eine Rotorscheibe (302) mit einem Rotorumfang (307), einer ersten Rotorseite (304) und einer zweiten Rotorseite (306) gegenüber der ersten Rotorseite (304) umfasst, wobei sich jede der ersten Rotorseite (304) und der zweiten Rotorseite (306) von der Welle (106, 110) radial nach außen zum Rotorumfang (307) erstrecken, wobei die Vielzahl von Rotor-Magnetfeld-Erzeugungselementen (308) mit der ersten Rotorseite (304) mit einem vorbestimmten Abstand dazwischen gekoppelt ist; und
der Stator (310, 506) einen Hohlraum (312) definiert, wobei der Stator (310, 506) ferner konfiguriert ist, um den zumindest einen Abschnitt der Welle (106, 110) durch den Hohlraum (312) hindurch aufzunehmen, wobei der Stator (310, 506) ferner eine Statorscheibe (310) mit einem Statorumfang (313), einer ersten Statorseite (314) und einer zweiten Statorseite (316) gegenüber der ersten Statorseite (314) umfasst, wobei sich jede der ersten Statorseite (314) und der zweiten Statorseite (316) vom Statorumfang (307) zum Hohlraum (312) radial nach innen erstrecken, wobei die Vielzahl von Stator-Magnetfeld-Erzeugungselementen (318) mit der zweiten Statorseite (316) gekoppelt ist, wobei die zweite Statorseite (316) nahe der ersten Rotorseite (314) positioniert ist, um einen Luftspalt (320) zwischen der Vielzahl von Rotor-Magnetfeld-Erzeugungselementen (308, 504) und der Vielzahl von Stator-Magnetfeld-Erzeugungselementen (318, 514) zu definieren.

3. Turbomaschinensystem (100, 200) nach Anspruch 1 oder Anspruch 2, wobei:
der Rotor (302, 502, 702) ferner eine Rotorscheibe (502) mit einem Rotorumfang (503) umfasst, wobei die Vielzahl von Rotor-Magnetfeld-Erzeugungselementen (504) entlang des Rotorumfangs (503) mit einem vorbestimmten Abstand dazwischen positioniert ist; und
wobei der Stator (310, 506) einen Hohlraum (508) definiert, wobei der Stator (310, 510) ferner konfiguriert ist, um den zumindest einen Abschnitt der Welle (106, 110) durch den Hohlraum (508) hindurch aufzunehmen, wobei der Stator (310, 506) ferner einen kreisförmigen Ring (506) mit einem Statorumfang (509) und einem Innenradius (510) umfasst, wobei die Vielzahl von Stator-Magnetfeld-Erzeugungselementen (318, 514) entlang des Innenradius (510) mit einem vorbestimmten Abstand dazwischen positioniert ist, wobei der Stator (310, 506) nahe dem Rotor (302, 502, 702) positioniert ist, um einen Luftspalt (516) zwischen der Vielzahl von Rotor-Magnetfeld-Erzeugungselementen (308, 504) und der Vielzahl von Stator-Magnetfeld-Erzeugungselementen (318, 514) zu definieren.

4. Turbomaschinensystem (100, 200) nach einem der vorstehenden Ansprüche, wobei die Vielzahl von Rotormagnetfeld-Erzeugungselementen (308, 504) eine Vielzahl von Permanentmagneten umfasst.

5. Turbomaschinensystem nach einem der vorstehenden Ansprüche, wobei der Stator (310, 506) ferner einen Wechselstromstator umfasst, der konfiguriert ist, um ein rotierendes Magnetfeld durch die Vielzahl von Statormagnetfeld-Erzeugungselementen (318, 514) hindurch zu induzieren.

6. Turbomaschinensystem (100, 200) nach Anspruch 5, wobei:
der Rotor (302, 502, 702) ferner mindestens zwei ringförmige Rotorringe (708) umfasst, die mit der Welle (106, 110) umlaufend gekoppelt sind, wobei die Vielzahl von Rotormagnetfeld-Erzeugungselementen (308, 504) mit den mindestens zwei Rotorringen (708) gekoppelt ist und sich axial dazwischen nahe der Welle (106, 110) erstreckt; und
wobei der Stator (310, 506) einen Hohlraum (508) definiert, wobei der Stator (310, 506) ferner konfiguriert ist, um den zumindest einen Abschnitt der Welle (106, 110) durch den Hohlraum (508) aufzunehmen, wobei der Stator (310, 506) ferner einen kreisförmigen Ring (506) mit einem Statorumfang (509) und einem Innenradius (510) umfasst, wobei die Vielzahl von Statormagnetfeld-Erzeugungselementen (318, 514) entlang des Innenradius (510) mit einem vorbestimmten Abstand dazwischen positioniert ist, wobei der Stator (310, 506) nahe dem Rotor (302, 502, 702) positioniert ist, um einen Luftspalt (516) zwischen der Vielzahl von Rotormagnetfeld-Erzeugungselementen (308, 504) und der Vielzahl von Statormagnetfeld-Erzeugungselementen (318, 514) zu definieren.

7. Turbomaschinensystem (100, 200) nach Anspruch 5 oder 6, wobei:
die Welle (106, 110) einen Wellenumfang (704) aufweist und einen Schlitz (902) einschließt, der darin umlaufend definiert ist; und
der Rotor (302, 502, 702) in dem Schlitz (902) im Wesentlichen bündig mit dem Wellenumfang (704) positioniert ist.

8. Turbomaschinensystem (100, 200) nach einem der Ansprüche 6 bis 7, ferner umfassend eine Kopplungsschicht (705) mit einer niedrigeren Wärmeleitfähigkeit als sowohl der Rotor (702) als auch die Welle (106, 110), wobei die Kopplungsschicht (205) zwischen der Welle (106, 110) und mindestens einem der mindestens zwei Rotorringe (708) und der Vielzahl von Rotormagnetfeld-Erzeugungselementen (308, 504) positioniert ist, wobei der Rotor durch die Kopplungsschicht (705) mit der Welle (106, 110) gekoppelt ist.

9. Turbomaschinensystem (100, 200) nach einem der Ansprüche 6 bis 8, wobei der Stator (310, 506) ferner eine Abnahmeverbindung (402) umfasst, die konfiguriert ist, um das Entfernen des Stators (310, 506) von der Welle (106, 110) zu ermöglichen.

10. Turbomaschinensystem (100, 200) nach einem der Ansprüche 6 bis 9, ferner umfassend eine Stromversorgung (124), die mit der Vielzahl von Statormagnetfeld-Erzeugungselementen (318, 514) gekoppelt ist, wobei der Stator (310, 506) ferner einen Wechselstrom (AC)-Stator (310, 506) umfasst, der konfiguriert ist, um ein rotierendes Magnetfeld durch die Vielzahl von Statormagnetfeld-Erzeugungselementen (318, 514) hindurch zu induzieren.

11. Turbomaschinensystem (100, 200) nach Anspruch 10, ferner umfassend einen Aktuatorstromwandler (120), der mit der Stromversorgung (124) und dem Aktuator (118) gekoppelt ist.

12. Turbomaschinensystem (100, 200) nach einem der Ansprüche 6 bis 11, ferner umfassend:
eine Aktuatorsteuerung (126), die mit dem Aktuator (118) gekoppelt ist; und
einen Sensor (128), der mit der Aktuatorsteuerung (126) gekoppelt ist, wobei der Sensor (128) konfiguriert ist, um eine physikalische Eigenschaft des Turbomaschinensystems (100, 200) zu erfassen, die für Torsionsschwingungen repräsentativ ist, und ein Steuersignal (130) an die Hilfssteuerung (126) zu übertragen, um abwechselnd das korrigierende Drehmoment durch den Aktuator (118) hindurch an die Welle (106, 110) anzulegen und davon zu entfernen, wobei der Sensor (128) ferner mit mindestens einer der Turbomaschine (102), der elektrischen Maschine (108) und der Welle (106, 110) gekoppelt ist.

13. Turbomaschinensystem (100, 200) nach einem der Ansprüche 6 bis 12, ferner umfassend:
eine Hilfsmaschine (104);
eine Vielzahl von Wellen (106, 110), die mit der elektrischen Maschine (108), der Turbomaschine (102) und der Hilfsmaschine (104) gekoppelt ist; und
eine Vielzahl von Aktuatoren (118), die mit mindestens zwei der Wellen (106, 110) der Vielzahl von Wellen (106, 110) gekoppelt ist.

14. Verfahren zum Dämpfen von Torsionsschwingungen eines Turbomaschinensystems (100, 200) nach Anspruch 1, wobei das Verfahren Folgendes umfasst:
Erfassen, durch einen mit dem Turbomaschinensystem (100, 200) gekoppelten Sensor (128), einer physikalischen Eigenschaft des Turbomaschinensystems (100, 200), die für Torsionsschwingungen repräsentativ ist;
Bestimmen, durch von dem Sensor (128) hindurch übertragene Daten, eines Vorhandenseins von Torsionsschwingungen; und
Erregen des Stators (310, 506) des Aktuators (118), um ein korrigierendes Drehmoment auf die Welle (106, 110) aufzubringen, um deren Torsionsschwingungen zu dämpfen.

## Revendications

1. Système de turbomachine (100, 200) comprenant une turbomachine (102) et une machine électrique (108) couplée à la turbomachine par un arbre (106, 110) s'étendant entre elles, où ledit système de
turbomachine (100, 200) comprend en outre un actionneur (118) avec un rotor (302, 502, 702) couplé à l'arbre (106, 110) et comprenant une pluralité d'éléments générateurs de champ magnétique de rotor (308, 504) ; et
un stator (310, 506) configuré pour recevoir au moins une partie de l'arbre (106, 110) à proximité dudit rotor (302, 502, 702), ledit stator (310, 506) comprenant une pluralité d'éléments générateurs de champ magnétique de stator (318, 514) à proximité de ladite pluralité d'éléments générateurs de champ magnétique de rotor (308, 504), ladite pluralité d'éléments générateurs de champ magnétique de stator (318, 514) configurés pour activer et désactiver alternativement pour, respectivement, appliquer et supprimer alternativement, un couple correcteur sur l'arbre (106, 110) pour amortir des oscillations de torsion de celui-ci.

2. Système de turbomachine (100, 200) selon la revendication 1, dans lequel :
ledit rotor (302, 502, 702) comprend en outre un disque de rotor (302) ayant une circonférence de rotor (307), un premier côté de rotor (304), et un second côté de rotor (306) opposé au premier côté de rotor (304), chacun du premier côté de rotor (304) et du second côté de rotor (306) s'étendant radialement vers l'extérieur depuis l'arbre (106, 110) jusqu'à la circonférence de rotor (307), ladite pluralité d'éléments générateurs de champ magnétique de rotor (308) couplés au premier côté de rotor (304) avec un espacement prédéterminé entre eux ; et
ledit stator (310, 506) définit une cavité (312), ledit stator (310, 506) configuré en outre pour recevoir l'au moins une partie de l'arbre (106, 110) à travers la cavité (312), ledit stator (310, 506) comprenant en outre un disque de stator (310) ayant une circonférence de stator (313), un premier côté de stator (314), et un second côté de stator (316) opposé au premier côté de stator (314), chacun du premier côté de stator (314) et du second côté de stator (316) s'étendant radialement vers l'intérieur depuis la circonférence de stator (307) jusqu'à la cavité (312), ladite pluralité d'éléments générateurs de champ magnétique de stator (318) couplés au second côté de stator (316), le second côté de stator (316) positionné à proximité du premier côté de rotor (314) pour définir un entrefer (320) entre ladite pluralité d'éléments générateurs de champ magnétique de rotor (308, 504) et ladite pluralité d'éléments générateurs de champ magnétique de stator (318, 514).

3. Système de turbomachine (100, 200) selon la revendication 1 ou la revendication 2, dans lequel :
ledit rotor (302, 502, 702) comprend en outre un disque de rotor (502) ayant une circonférence de rotor (503), ladite pluralité d'éléments générateurs de champ magnétique de rotor (504) positionnés le long de la circonférence de rotor (503) avec un espacement prédéterminé entre eux ; et
ledit stator (310, 506) définit une cavité (508), ledit stator (310, 510) configuré en outre pour recevoir l'au moins une partie de l'arbre (106, 110) à travers la cavité (508), ledit stator (310, 506) comprenant en outre une bague annulaire (506) ayant une circonférence de stator (509) et un rayon interne (510), ladite pluralité d'éléments générateurs de champ magnétique de stator (318, 514) positionnés le long du rayon interne (510) avec un espacement prédéterminé entre eux, ledit stator (310, 506) positionné à proximité dudit rotor (302, 502, 702) pour définir un entrefer (516) entre ladite pluralité d'éléments générateurs de champ magnétique de rotor (308, 504) et ladite pluralité d'éléments générateurs de champ magnétique de stator (318, 514).

4. Système de turbomachine (100, 200) selon l'une quelconque des revendications précédentes, dans lequel ladite pluralité d'éléments générateurs de champ magnétique de rotor (308, 504) comprend une pluralité d'aimants permanents.

5. Système de turbomachine selon l'une quelconque des revendications précédentes, dans lequel ledit stator (310, 506) comprend en outre un stator à courant alternatif configuré pour induire un champ magnétique rotatif à travers ladite pluralité d'éléments générateurs de champ magnétique de stator (318, 514).

6. Système de turbomachine (100, 200) selon la revendication 5, dans lequel :
ledit rotor (302, 502, 702) comprend en outre au moins deux bagues de rotor annulaires (708) couplées circonférentiellement audit arbre (106, 110), ladite pluralité d'éléments générateurs de champ magnétique de rotor (308, 504) couplés auxdites au moins deux bagues de rotor (708) et s'étendant axialement entre elles à proximité dudit arbre (106, 110) ; et
ledit stator (310, 506) définit une cavité (508), ledit stator (310, 506) configuré en outre pour recevoir ladite au moins une partie dudit arbre (106, 110) à travers la cavité (508), ledit stator (310, 506) comprenant en outre une bague annulaire (506) ayant une circonférence de stator (509) et un rayon interne (510), ladite pluralité d'éléments générateurs de champ magnétique de stator (318, 514) positionnés le long du rayon interne (510) avec un espacement prédéterminé entre eux, ledit stator (310, 506) positionné à proximité dudit rotor (302, 502, 702) pour définir un entrefer (516) entre ladite pluralité d'éléments générateurs de champ magnétique de rotor (308, 504) et ladite pluralité d'éléments générateurs de champ magnétique de stator (318, 514).

7. Système de turbomachine (100, 200) selon la revendication 5 ou 6, dans lequel :
ledit arbre (106, 110) a une circonférence d'arbre (704) et inclut une fente (902) définie circonférentiellement à l'intérieur de celui-ci ; et
ledit rotor (302, 502, 702) est positionné dans ladite fente (902) essentiellement au même niveau que la circonférence d'arbre (704).

8. Système de turbomachine (100, 200) selon l'une quelconque des revendications 6 à 7, comprenant en outre une couche de couplage (705) ayant une conductivité thermique plus basse que ledit rotor (702) et que ledit arbre (106, 110), ladite couche de couplage (705) positionnée entre ledit arbre (106, 110) et au moins l'un desdits au moins deux anneaux de rotor (708) et ladite pluralité d'éléments générateurs de champ magnétique de rotor (308, 504), ledit rotor couplé audit arbre (106, 110), à travers ladite couche de couplage (705).

9. Système de turbomachine (100, 200) selon l'une quelconque des revendications 6 à 8, dans lequel ledit stator (310, 506) comprend en outre un maillon de détachement (402) configuré pour faciliter le retrait dudit stator (310, 506) dudit arbre (106, 110).

10. Système de turbomachine (100, 200) selon l'une quelconque des revendications 6 à 9, comprenant en outre une alimentation en puissance (124) couplée à ladite pluralité d'éléments générateurs de champ magnétique de stator (318, 514), ledit stator (310, 506) comprenant en outre un stator (310, 506) à courant alternatif (CA) configuré pour induire un champ magnétique rotatif à travers ladite pluralité d'éléments générateurs de champ magnétique de stator (318, 514).

11. Système de turbomachine (100, 200) selon la revendication 10 comprenant en outre un convertisseur de puissance d'actionneur (120) couplé à ladite alimentation en puissance (124) et audit actionneur (118).

12. Système de turbomachine (100, 200) selon l'une quelconque des revendications 6 à 11, comprenant en outre :
un régulateur d'actionneur (126) couplé audit actionneur (118) ; et
un capteur (128) couplé audit régulateur d'actionneur (126), ledit capteur (128) configuré pour détecter une caractéristique physique dudit système de turbomachine (100, 200) représentative d'oscillations de torsion et transmettre un signal de régulation (130) audit régulateur d'actionneur (126) pour appliquer et supprimer alternativement le couple correcteur sur ledit arbre (106, 110) à travers ledit actionneur (118), dans lequel ledit capteur (128) est en outre couplé à au moins l'un de ladite turbomachine (102), de ladite machine électrique (108), et dudit arbre (106, 110).

13. Système de turbomachine (100, 200) selon l'une quelconque des revendications 6 à 12, comprenant en outre :
une machine auxiliaire (104) ;
une pluralité d'arbres (106, 110) couplés à ladite machine électrique (108), à ladite turbomachine (102), et à ladite machine auxiliaire (104) ; et
une pluralité d'actionneurs (118) couplés à au moins deux desdits arbres (106, 110) de ladite pluralité d'arbres (106, 110).

14. Procédé d'amortissement d'oscillations de torsion d'un système de turbomachine (100, 200) selon la revendication 1, ledit procédé comprenant :
la détection, par l'intermédiaire d'un capteur (128), couplé au système de turbomachine (100, 200), d'une caractéristique physique du système de turbomachine (100, 200) représentative d'oscillations de torsion :
la détermination, à travers de données transmises par le capteur (128), d'une présence d'oscillations de torsion ; et
l'activation du stator (310, 506) de l'actionneur (118) pour appliquer un couple correcteur à l'arbre (106, 110) pour amortir les oscillations de torsion de celui-ci.
